# EUROPEAN PATENT APPLICATION

(11) **EP 4 726 204 A1**
(43) Date of publication of application: **15.04.2026**
(21) Application number: 24383095.7
(22) Date of filing: 08.10.2024
(51) Int. Cl.: F03D 7/02

(54) **METHOD FOR OPERATING A WIND TURBINE AND WIND TURBINE**

(71) Applicant: Nordex Energy SE & Co. KG, 22419 Hamburg (DE); Nordex Energy Spain, S.A.U., 31395 Barasoain (Navarra) (ES)
(72) Inventor: MERCADER GÓMEZ, Pedro, 31395 Barasoain (ES); WEIERS, Jonathan, 22419 Hamburg (DE); FROMMANN, Johannes, 22419 Hamburg (DE)
(74) Representative: Epping - Hermann - Fischer

(57) **Abstract**

A method for operating a wind turbine (1) for reducing a risk of wind turbine overloading in the presence of a wind gust event is provided, the method comprising the steps:
- providing first information (II) which is representative of a rate of change of a first wind turbine parameter (P1) comprising at least one of a first wind turbine loading parameter and a first wind turbine operating parameter over time, wherein each of the first wind turbine loading parameter and the first wind turbine operating parameter depends on a wind speed at the location of the wind turbine (1),
- determining an adjustable first threshold (T1) considering the first information (I1),
- comparing, in a first comparison step, the first information (II) to the first threshold (T1) and generating a first trigger signal (TS1) in case the first information (II) exceeds the first threshold (T1),
- generating a control action (CA) intended to reduce the risk of wind turbine overloading caused by the wind gust event in case an action trigger (AT) is generated, wherein the generation of the action trigger (AT) requires that at least the first trigger signal (TS1) is generated.

Furthermore, a wind turbine (1) with a control system (10) is provided.

## Description

A method for operating a wind turbine is specified. Preferably, the method is configured for detecting and reacting to wind-induced events that can cause extreme loads. Such events can comprise wind-gust-induced high-load events like extreme gust with wind direction changes. Furthermore, a wind turbine is specified.

A wind turbine usually comprises a rotor having multiple rotor blades. The rotor blades transform wind energy into a drive torque that drives a generator of the wind turbine via a drive train. The wind conditions and the turbine settings cause loads acting on the wind turbine that may not exceed certain safety thresholds. Loads under extreme gust conditions are frequently dimensioning the design of the tower of a wind turbine and, therefore, it is of utmost importance that a wind turbine controller is equipped with effective strategies to cope with these cases. Said events may cause the wind turbine to operate with a very high thrust force, in particular for a short time just after an extreme gust, which can, for instance, lead to a high bending moment at the tower base. Known thrust limiting methods normally require some time to act, so that they may not be fast enough to avoid extreme loads in these cases.

At least one object of certain embodiments is to provide a method for operating a wind turbine. At least one object of further embodiments is to provide a wind turbine.

These objects are achieved by the method and the subject-matter according to the independent claims. Advantageous embodiments and developments are characterized in the dependent claims and are disclosed by the following description and the drawings.

According to at least one embodiment, a method for operating a wind turbine is specified. Preferably, the method is a method for operating a wind turbine for reducing a risk of wind turbine overloading in the presence of a wind gust event.

Wind gusts, especially in combination with high wind speeds, are known to be able to cause high mechanical loads. Put in simple terms, a wind gust event can be understood as a sudden increase of wind speed that can be accompanied by a sudden change in wind direction. For instance, the term wind gust event as used herein can denote a wind event with a peak wind speed of at least about 20 km/h or at least about 30 km/h, a variation in wind speed between peaks and lulls of at least about 12 km/h or of at least about 16 km/h and a duration of usually less than about 20 s. Here and in the following, the term "wind turbine overloading" and similar terms denote potentially harmful mechanical loads acting on at least one component of the wind turbine or even on the wind turbine as a whole, so that there is a significant risk that at least one component of the wind turbine is damaged.

According to at least one further embodiment, the method for operating a wind turbine is a computer-implemented method. In other words, a computer-implemented method is specified that can comprise one or more or all of the steps and features described herein in connection with the method for operating a wind turbine. Accordingly, the computer-implemented method can comprise the method for operating a wind turbine.

According to at least one further embodiment, a computer program product is specified, the computer program product comprising instructions which, when the computer program product is executed by a computer or computer system, cause the computer or computer system to carry out the method for operating a wind turbine.

According to at least one further embodiment, a control system for performing the method for operating a wind turbine is specified. The control system or at least one component of the control system can for instance comprise or be part of a computer or computer system. For example, the control system can be a part of a wind turbine controller controlling the wind turbine.

According to at least one further embodiment, a wind turbine is specified that comprises the control system for performing the method for operating the wind turbine.

All features and embodiments described before and hereinafter equally apply to the method for operating a wind turbine, the computer-implemented method, the computer program product, the control system and the wind turbine.

According to a further embodiment, the method for operating a wind turbine comprises one or more steps of providing information. The provided information can be, for instance, at least one or more or all of a first, second, third and fourth information as described further below. Thus, the term "provided information" or merely "information" used herein can refer to any of the first, second, third and fourth information.

The provided information can be representative of a wind turbine parameter, in particular of a wind turbine loading parameter and/or a wind turbine operating parameter. In particular, the wind turbine parameter comprises at least one of a wind turbine loading parameter and a wind turbine operating parameter. In particular, each wind turbine parameter used in the method described herein, i.e. each of the wind turbine loading parameter and the wind turbine operating parameter, depends on a wind speed at the location of the wind turbine. Particularly preferably, a wind turbine loading parameter as described here and in the following can be indicative of at least one of a rotor thrust, a tower bending moment and a nacelle acceleration. In other words, the wind turbine loading parameter can be indicative of a rotor thrust, a tower bending moment, a nacelle acceleration or any combination of those. Moreover, a wind turbine operating parameter as described here and in the following can be indicative of a generator speed. The rotor thrust can be estimated based on at least one or more parameters chosen from a wind speed, a pitch angle, a generator speed, a generator torque, an air density at the location of the wind turbine and an electrical power generated by the wind turbine. When estimating the rotor thrust, it can be possible that in addition one or more rotor properties such as a rotor diameter, a rotor tilt angle and/or a rotor cone angle are taken into account. For example, the rotor thrust may be estimated based on one or more of the before-mentioned parameters and/or one or more of the rotor properties by using one or more lookup tables.

Estimating the rotor thrust based on the parameters and rotor properties as described before was found to enable a reliable and precise estimation of the rotor thrust. In particular, it was found that, in comparison to the parameters and rotor properties listed herein, other information like blade load data could contain a too high level of noise and could lead to a rotor thrust estimation with insufficient accuracy. Thus, according to preferred embodiments, the rotor thrust is estimated without taking into account blade load data.

The wind speed may be an estimated wind speed that is determined, for instance via one or more lookup tables, based on one or more parameters and/or rotor properties that can comprise one, several or all of the above-mentioned parameters and/or rotor properties. Alternatively, the wind speed can be a measured wind speed that is measured for example by an anemometer that can be located on the wind turbine.

Furthermore, the provided information can be representative of a rate of change of a wind turbine parameter over time, in particular of a rate of change of a wind turbine loading parameter and/or a wind turbine operating parameter over time. The rate of change over time can refer to a time period, in particular a time period during which the rate of change over time is determined for providing said information, so that the rate of change can refer to an average rate of change during said time period. The time period can particularly preferably be less than the duration of a wind gust. For instance, said provided information can be indicative of a rate of change over a time of equal to or less than 3 s or equal to or less than 1 s or equal to or less than 0.5 s or equal to or less than 0.1s. Preferably, the rate of change over time is determined by a time derivative. Accordingly, said provided information can be indicative of a time derivative of a wind turbine loading parameter and/or a time derivative of a wind turbine operating parameter. In particular, the time derivative as mentioned here and in the following can be a first order time derivative. The time derivative can be equivalent to an instantaneous rate of change of said parameter as compared to the average rate of change mentioned before.

According to a further embodiment, in a comparison step the provided information is compared to a threshold associated with the provided information. In case the provided information exceeds the associated threshold, a trigger signal associated with the provided information can be generated. Furthermore, an action trigger can be generated, wherein the generation of the action trigger requires that at least one or more trigger signals are generated. Moreover, a control action can be generated, wherein the control action is intended to reduce the risk of wind turbine overloading caused by a wind gust event. The control system can comprise at least one determination unit for providing information, at least one threshold determination unit for determining a threshold associated with the provided information, a comparison unit for performing the comparison step and for generating a trigger signal in case the provided information exceeds the associated threshold, an action trigger generating unit for generating the action trigger, and a control unit performing the control action on at least one component of the wind turbine.

The threshold associated with the provided information can be a predetermined threshold or can be an adjustable threshold considering the provided information. Determining an adjustable threshold considering the provided information can comprise calculating a statistical parameter derived from the provided information over a time period that can be preferably a rolling time period as described further below. The statistical parameter can be determined by using a combination of a first value based on the provided information over the time period and of a second value based on an amount of variation of the provided information over the time period. The combination can be a sum of a weighted first value corresponding to the first value multiplied by a first factor and of a weighted second value corresponding to the second value multiplied by a second factor. For instance, the first factor and the second factor may be equal to 1, such that the combination can be a sum of the first value and the second value. For instance, the first factor may be equal to 1 and the second factor may be greater than 1 or greater than 2. Preferably, the first factor is equal to 1 and the second factor is equal to 3. The second factor can provide a safety gain and can ensure that the first threshold is above the first information to be compared with for 99.85 % of cases assuming that input data is gaussian.

Furthermore, the provided information can be provided repeatedly, so that the information is provided continuously, resulting in a series of consecutively provided information, for example a series of data values representing the provided information. The series of provided information can be used for statistical calculations, in particular for calculating said statistical parameter. Furthermore, the method steps of providing information, using a predetermined threshold or determining an adjustable threshold and comparing the provided information to the threshold can be continuously repeated. Particularly preferably, the series of provided information contains information provided during a time period having a predetermined duration.

Thus, for calculating the statistical parameter and, in particular, for determining the first value and the second value as described before, the above-mentioned series of provided information can be considered and taken into account. In other words, a plurality of values that are consecutively determined over a predetermined time period and that are indicative of the series of provided information can be provided and used for calculating the statistical parameter. Said time period related to the adjustable threshold can be different from the time period related to the rate of change over time for providing the information as described above.

Particularly preferably, the time period related to the adjustable threshold is a rolling time period. In particular, the rolling time period is a time interval starting at a time in the past with a predetermined time difference to the present and ending in the present, i.e., with the latest information that is provided. For instance, the rolling time period comprises or consists of the last n seconds before the latest information is provided, wherein n can be any positive number. For example, n can be, 3, 5 or 10. In other words, the rolling time period denotes the time interval of the last 3 second or the last 5 seconds or the last 10 seconds before the latest information is provided. Each time new information is provided and added to the series of provided information, the provided information of the series farthest in the past is cancelled from the series of provided information.

As described above, wind gust events can be characterized by sudden increases of the wind speed, so that a certain rate of change over time of a wind-speed dependent wind turbine parameter can be indicative of such wind gust event. By setting a suitable threshold, the method described herein can preferably encompass the detection of extreme gust environmental conditions and the reaction aimed to mitigate high loads that can be caused by such events. In particular, the method can be configured for providing a detection of extreme gusts and a feedforward reaction aimed to mitigate the load on the wind turbine, for instance by increasing the collective pitch angle to avoid the thrust peak and hence maintaining the bending moment at the tower base at a tolerable level as described further below.

As described above, information can provided that can be a first, second, third and/or fourth information and that is compared to an associated threshold that can, accordingly, be a first, second, third and/or fourth threshold, so that, depending on the result of the comparison, a first, second, third and/or fourth trigger signal can be generated. In the following, preferred embodiments are described that can comprise features of the embodiments described so far.

Particularly preferably, the method can comprise a step of providing first information which is representative of a rate of change of a first wind turbine parameter comprising at least one of a first wind turbine loading parameter and a first wind turbine operating parameter over time, wherein each of the first wind turbine loading parameter and the first wind turbine operating parameter depends on a wind speed at the location of the wind turbine. Furthermore, the method can comprise the steps of determining an adjustable first threshold considering the first information, comparing, in a first comparison step, the first information to the first threshold and generating a first trigger signal in case the first information exceeds the first threshold, and generating a control action intended to reduce the risk of wind turbine overloading caused by the wind gust event in case an action trigger is generated, wherein the generation of the action trigger requires that at least the first trigger signal is generated. Consequently, the control system can comprise a first determination unit for providing the first information, a first threshold determination unit for determining the first threshold, a first comparison unit for performing the first comparison step and, depending on the result of comparison, generating the first trigger signal, an action trigger generating unit for generating the action trigger, and a control unit performing the control action on at least one component of the wind turbine.

Particularly preferably, the first information is indicative of a time derivative of the first wind turbine loading parameter and/or indicative of a time derivative of the first wind turbine operating parameter. In particular, the first information can be indicative of the time derivative of the rotor thrust and/or of the time derivative of the generator speed. These parameters as well as any of the other wind turbine related parameters described herein increase with increasing wind speed. Thus, the rate of change over time has a positive sign in case the wind turbine related parameter(s) the first information is indicative of increases over time. Furthermore, the first threshold is preferably determined to have a positive sign. Consequently, the associated first trigger signal is generated only for positive rates, i.e. increases, that exceed the first threshold.

Particularly preferably, determining the first threshold considering the first information can comprise calculating a statistical parameter derived from the first information over a time period, in particular a rolling time period as described above. Furthermore, the statistical parameter can be determined by using a combination of a first value based on the first information over the time period and of a second value based on an amount of variation of the first information over the time period. Preferably, the first value is a mean value of the first information over the time period and the second value is a standard deviation of the first information over the time period. The combination of the first value and the second value is preferably a sum of the weighted first value and the weighted second value as described above.

Furthermore, the first threshold can be defined as a maximum value chosen from the statistical parameter and at least one or preferably both of a filtered signal resulting from filtering the statistical parameter and of a predefined minimum value. Using a predefined minimum value as lower limit for the first threshold can ensure that the first threshold does not drop to a very low value, in which case the trigger signal would be generated not only in case of a wind gust event but instead as soon as a slight increase of wind speed occurs (which is not desired). By using such a predefined minimum value as a lower limit for the first threshold, it can be prevented that the first threshold would drop to a very low value for example in case the wind speed has been low and close to constant during the rolling time period. For instance, the filtered signal can result from filtering the statistical parameter by using a P-filter, i.e. a first order low-pass filter. For instance, the filter can be active only in case the unfiltered statistical parameter decreases over time, so that the filtered signal decreases slower than the unfiltered statistical parameter. This way, a too fast decrease of the first threshold can be avoided.

Preferably, the method can comprise providing at least one further information, determining at least one further threshold, comparing in at least one further comparison step the at least one further information to the at least one further threshold and, in case the at least one further information exceeds the at least one further threshold, generating at least one further trigger signal. Here and in the following, all features and embodiment described in connection with the first information, the first threshold and the first comparison step can also apply similarly to the at least one further information, the at least one further threshold and the at least one further comparison step. In particular, the expression "at least one further" can include one, more or all of a second, third and fourth. Consequently, the control system can comprise at least one further determination unit, at least one further threshold determination unit and at least one further comparison unit.

In particular, the method can comprise providing second information which is representative of a second wind turbine parameter comprising at least one of a second wind turbine loading parameter and a second wind turbine operating parameter, wherein each of the second wind turbine loading parameter and the second wind turbine operating parameter depends on a wind speed at the location of the wind turbine. Furthermore, the method can comprise the steps of comparing, in a second comparison step, the second information to a second threshold, and, in case the second information exceeds the second threshold, generating a second trigger signal, wherein the generation of the action trigger additionally requires that the second trigger signal is generated. Preferably, the second information is different to the first information. However, the first information and the second information can be determined based on the same wind turbine related parameter. For example, the first and second information are both representative of a same wind turbine loading parameter, i.e. the second wind turbine loading parameter can correspond to the first wind turbine loading parameter and/or the first and second information are both representative of a same wind turbine operating parameter, i.e. the second wind turbine operating parameter corresponds to the first wind turbine operating parameter.

The second information can, for example, be representative of the actual value of the second wind turbine loading parameter and/or the second wind turbine operating parameter, rather than being representative of a rate of change over time as the first information. The second threshold can be a predetermined threshold, i.e., a constant threshold that is independent of the second information. Defining the second threshold as a constant threshold can be advantageous for example to avoid a tower overloading which tends to happen for wind gust events approaching a rated wind speed. Alternatively, the second threshold can be an adjustable threshold and the method further comprises a step of determining the adjustable second threshold considering the second information. For example, the second threshold can be calculated in a same way or similarly to the first threshold. Defining the second threshold as an adjustable threshold can be advantageous for example to avoid an overloading of drive train components which tends to happen for wind gust events at overrated wind speeds.

Furthermore, the first information can be representative of a rate of change of the first wind turbine loading parameter and the method can further comprise the step of providing third information which is representative of a rate of change of the first wind turbine operating parameter. Furthermore, the method can comprise the steps of determining an adjustable third threshold based on the third information, comparing, in a third comparison step, the third information to the third threshold and generating a third trigger signal in case the third information exceeds the third threshold, wherein the generation of the action trigger additionally requires that the third trigger signal is generated. In particular, the third adjustable threshold can be determined in the same way or similarly to the first threshold. By taking into account the first information and the third information being representative of the rate of change over time of two different wind turbine related parameters like, for instance, a rotor thrust as first wind turbine loading parameter and the generator speed as first wind turbine operating parameter, a certain degree of redundancy can be accomplished.

Furthermore, the second information can be representative of the second wind turbine loading parameter and the method can comprise the step of providing fourth information which is representative of the second wind turbine operating parameter. The method can further comprise the steps of comparing, in a fourth comparison step, the fourth information to a fourth threshold, and, in case the fourth information exceeds the fourth threshold, generating a fourth trigger signal, wherein the generation of the action trigger additionally requires that the fourth trigger signal is generated. In particular, the step related to the fourth information can be similar to the method steps related to the second information.

According to a further embodiment, the control action is intended to reduce adverse effects on the wind turbine that can be caused by potentially harmful wind gust events. As a result of the control action, preferably, at least one of the provided information, i.e. at least one of the first, second, third and fourth information depending on the amount of provided information, will become less than the associated threshold, so that the action trigger is not generated anymore. Furthermore, the control action can be stopped in case the action trigger is not generated anymore.

In particular, the control action can comprise a collective pitch control action, a generator torque control action and/or a generator power control action. The collective pitch control action can comprise collectively increasing a pitch setpoint for a plurality of rotor blades of the wind turbine, wherein the generator torque control action can comprise increasing the generator torque and/or the generator power control action can comprises reducing the electrical power produced by the generator.

Further features, advantages and expediencies will become apparent from the following description of exemplary embodiments in conjunction with the figures.
Figure 1 shows a schematic illustration of a wind turbine with a control system according to an embodiment,
Figure 2 shows a schematic illustration of method steps of a method for operating a wind turbine and of a control system according to further embodiments,
Figures 3 to 5 show schematic illustrations of method steps of a method for operating a wind turbine and of a control system according to further embodiments,
Figures 6 and 7 show schematic illustrations of method steps of a method for operating a wind turbine and of a control system according to further embodiments,
Figures 8 to 10 show schematic illustrations of method steps of a method for operating a wind turbine and of a control system according to further embodiments.

In the figures, elements of the same structure and/or functionality may be referred to by the same reference signs. It is to be understood that embodiments showing the figures are illustrative representations and are not necessarily drawn to scale.

In order to give a thorough understanding, preferred embodiments for instance of a method for operating a wind turbine, of a control system and of a wind turbine are described in the following in connection with the figures. However, the described embodiments and combinations of features are not limiting. Alternatively or additionally to the features described in connection with the figures, the embodiments shown in the figures can comprise further features described in the general part of the description. Moreover, features and embodiments of the figures can be combined with each other, even if such combination is not explicitly described.

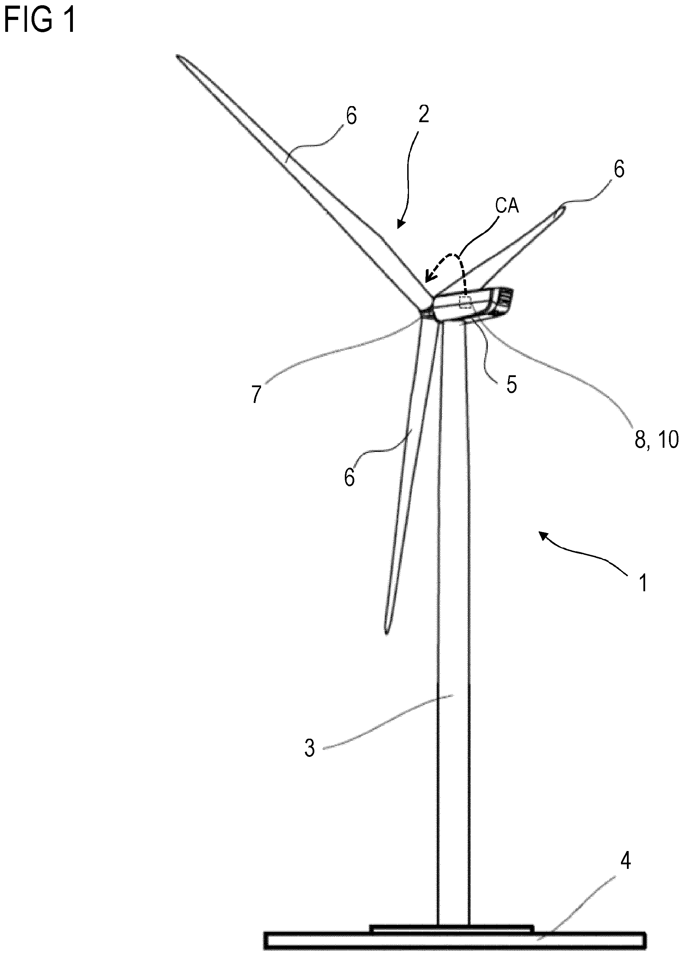

Figure 1 shows a wind turbine 1 which comprises a rotor 2 mounted to a tower 3. The tower 3 is fixed to the ground by means of a foundation 4. The rotor 2 comprises one or more rotor blades 6, which are arranged on a rotor hub 7 mounted to a nacelle 5. The nacelle 5 is rotatably mounted at one end of the tower 3 opposite to the ground. The nacelle 5 houses, for example, a generator (not shown) which is coupled to the rotor 2 via a rotor shaft and, if necessary, a gearbox (not shown).

During operation, the rotor 2 is set in rotation by an air flow, for example wind. This rotational movement is transmitted to the generator via a drive train comprising, inter alia, the rotor shaft and, if necessary, the gearbox. The generator converts the mechanical energy of the rotor 2 into electrical energy.

For optimizing the energy output of the wind turbine 1, the nacelle 5 has to be rotated into the wind. Moreover, the pitch angles of the rotor blades 6 have to be set according to the wind speed. This is done with the help of drives (not shown) which rotate the rotor blades 6 and the nacelle 5 to a respective target position. In order to control and operate the drives, the wind turbine 1 comprises a wind turbine controller 8 comprising a drive control system which determines operating setpoints with which the drives are operated. As indicated in Figure 1, the wind turbine controller 8 can be located in the nacelle 5.

In case of wind gust events, the wind speed suddenly increases for a certain time. Additionally, it can be possible that the wind direction suddenly changes. If said changes are too drastic and if the mode of operation of the wind turbine, i.e. said operating setpoints, is kept unchanged, it can be possible that such wind gust events can cause very high or even extreme levels of mechanical load imposed on the wind turbine's 1 components or even on the whole wind turbine 1, which can lead to a significant risk of overloading and, thus, severe damage to the wind turbine 1. In order to reduce the risk of wind turbine overloading in the presence of a wind gust event, a method for operating the wind turbine 1 is executed as described in connection with the following figures.

In order to execute the method, the wind turbine 1 comprises a control system 10 that can be part of the wind turbine controller 8 as indicated in Figure 1 or that can be a separate control system. The control system 10 is also described in connection with the following figures.

In particular, the method as described in the following can be configured for detecting potentially harmful wind gust events and to cause a control unit of the control system 10 to perform a control action CA on at least one component of the wind turbine 1 as indicated symbolically in Figure 1 by the dashed arrow, wherein the control action CA is intended to reduce the risk of wind turbine overloading caused by a wind gust event. For example, the control action CA comprises one or more or all of a generator torque control action, a generator power control action and a collective pitch control action.

The generator torque control action comprises suitable measures to increase the generator torque. For example, the generator torque control action comprises temporarily increasing the generator torque towards the maximum allowable limits in order to reduce the generator speed and thus to reduce the risk of wind turbine overloading. The generator torque can for example be increased by adjusting the current in the generator via a frequency converter.

The generator power control action preferably comprises suitable measures to reduce the electrical power produced by the generator. This can for example be achieved by a combination of collectively pitch control action and a generator torque control action leading to a reduction of the generator power.

The collective pitch control action preferably comprises collectively increasing a pitch setpoint for a plurality of the rotor blades of the wind turbine 1, wherein said plurality of rotor blades 6 can preferably include all rotor blades 6 of the wind turbine 1. Preferably, the collective pitch control action comprises adding a collective pitch offset to the pitch setpoint for the plurality of rotor blades 6 of the wind turbine 1. The term "collective" can, in particular, mean that the same applies for all the rotor blades.

Under normal operation, the pitch setpoint for each rotor blade 6 is usually determined individually or collectively by other functions of the wind turbine controller 8. In case of a collective pitch control action, the pitch setpoint is the same of all rotor blades 6, whereas, in case of individual pitch control, the pitch setpoint may differ between the individual rotor blades 6. The pitch setpoint can correspond to a pitch angle setpoint along time, a pitch rate or a combination thereof.

Collectively increasing the pitch setpoint can for example include adding a pitch ramp with a predefined pitch rate over a maximum time window. Also, it can include adding a pitch ramp with a predefined pitch rate until the pitch angle offset resulting from the pitch ramp reaches a maximum value. The resulting pitch setpoint command of the collective pitch control action, i.e. a combination of the pitch setpoint and the collective pitch reaction, directs the wind turbine's 1 pitch control mechanism to pitch the plurality of rotor blades 6.

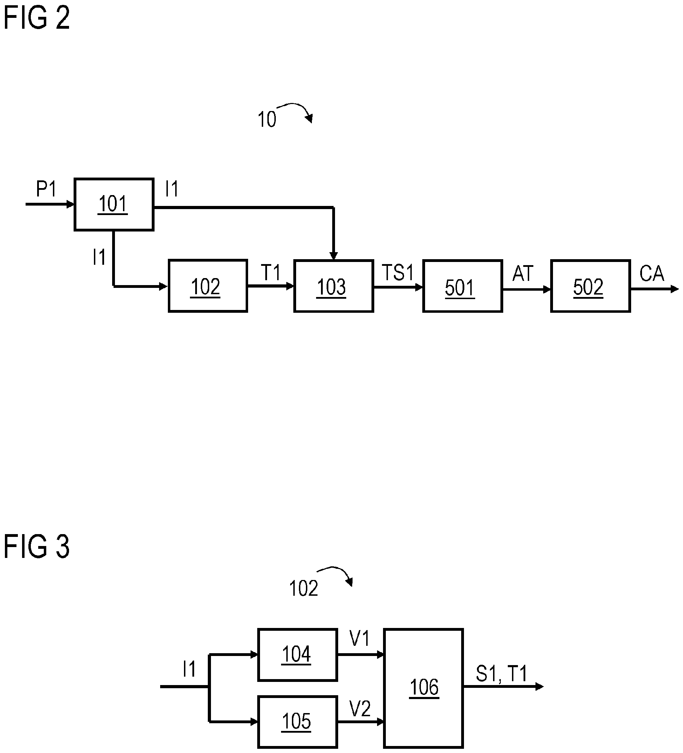

In connection with Figures 2 to 10 preferred exemplary embodiments for the method for operating the wind turbine and the control system 10 are described. In particular, the control system 10 is configured for performing the method steps of the method for operating the wind turbine. The various units of the control system 10 that are described in the following can be specifically configured to perform the associated method step or can be part of one or more other control systems that can also perform method steps of other methods for operating the wind turbine. In particular, the method for operating the wind turbine can be a computer-implemented method or can be a part of the computer-implemented method. Consequently, the computer-implemented method can comprise or be the method operating the wind turbine as described in connection with Figures 2 to 10. Moreover, the computer-implemented method can be implemented in a computer program product, so that the computer program product comprises instructions which, when the computer program product is executed by a computer or computer system, cause the computer or computer system to carry out the method for operating the wind turbine. Features and embodiments referring to the method for operating the wind turbine also apply to the computer-implemented method and to the computer program product. Thus, Figures 2 to 10 are also representations of the computer-implemented method and of the computer program product.

In the method for operating the wind turbine as explained in the following, information is provided that is representative of a wind turbine parameter or a rate of change of a wind turbine parameter. Furthermore, a threshold is provided, wherein the threshold is associated with the provided information, and the provided information is compared to the threshold. In case the provided information exceeds the associated threshold, a trigger signal is generated. In particular, various information associated with various thresholds can be provided and for each information that exceeds the associated threshold a respective trigger signal can be provided. Thus, the control system 10 comprises one of more determination units for providing one or more information, one or more threshold determination units for providing one or more thresholds, and one or more comparison units for performing one or more comparison steps and for generating one or more trigger signals depending on the respective comparison step. In case all required trigger signals are generated, an action trigger is generated that causes the execution of a control action as described before.

As shown in Figure 2, the control system 10 can comprise a first determination unit 101 for providing first information I1, a first threshold determination unit 102 for providing a first threshold T1, and a first comparison unit 103 for comparing the first information I1 to the first threshold T1. Thus, the method comprises a step of providing a first information I1. The first information I1 is based on a first wind turbine parameter P1 that is provided to the first determination unit 101. In particular, the first information I1 is preferably chosen such that an increase of the wind speed at the location of the wind turbine causes the first information I1 to increase.

In the shown embodiment, the first information is representative of a rate of change of a first wind turbine parameter P1. The first wind turbine parameter P1 can be measured directly or can be estimated based on other measurements and/or estimations. The first wind turbine parameter P1 comprises at least one of a first wind turbine loading parameter and a first wind turbine operating parameter over time, wherein each of the first wind turbine loading parameter and the first wind turbine operating parameter depends on a wind speed at the location of the wind turbine. Particularly preferably, any wind turbine loading parameter as used in the method described herein can be indicative of at least one of a rotor thrust, a tower bending moment and a nacelle acceleration, and any wind turbine operating parameter can be indicative, for instance, of a generator speed. Each of these wind turbine parameters preferably increases with increasing wind speed.

For example, the rotor thrust can be estimated based on at least one of a wind speed, a pitch angle, a generator speed, a generator torque, an air density at the location of the wind turbine and an electrical power generated by the wind turbine. The wind speed may be an estimated wind speed that is determined, for instance calculated, based on one or more other parameters that can comprise one, several or all of the other parameters mentioned before. Alternatively, the wind speed can be a measured wind speed that is measured for example by an anemometer that can be located on the wind turbine.

By way of example only, for the following description the first wind turbine parameter P1 is assumed to be the rotor thrust or the generator speed. However, any of the other wind turbine parameters and any combination of two or more of the described wind turbine parameters is also possible as first wind turbine parameter P1.

The first determination unit 101 provides as first information I1 a rate of change of the first wind turbine parameter P1 over time. In particular, in the shown embodiment the rate of change over time is a first order time derivative of the first wind turbine parameter P1. Thus, the first determination unit 101 is configured for performing a time derivative on the first wind turbine parameter P1. Compared to a rate of change over time that is an average change over a predetermined time period, the first order time derivative can provide a measure for an instantaneous rate of change of the first wind turbine parameter. However, an average rate of change over a predetermined time period can also be possible.

The first determination unit 101 provides the first information I1 to both the first threshold determination unit 102 and to the first comparison unit 103. The first threshold determination unit 102 provides a first threshold T1 based on the first information I1 and provides the first threshold T1 also to the first comparison unit 103. In a first comparison step, the first information I1 directly provided by the first determination unit 101 and the first threshold T1 are compared. In case the first information I1 exceeds the first threshold T1, i.e. in case of a positive comparison event, the first comparison unit 103 generates first trigger signal TS1 and provides the first trigger signal TS1 to an action trigger generating unit 501. The first trigger signal TS1 can be, for instance a logical 1 or another electronic signal that represents a positive comparison event in the first comparison unit 103. In case a negative comparison event is provided, i.e. in case the first information I1 does not exceed the first threshold T1, the first comparison unit 103 can, for instance, provide a logical 0 or another electronic signal that represents the negative comparison event, which means that no first trigger signal TS1 is generated.

The described steps are performed repeatedly, so that the first information I1 is repeatedly provided and compared to the first threshold T1. The first trigger signal TS1 is generated as long as the first information Ills found to exceed the first threshold T1. In the shown example only the first trigger signal TS1 is required for generating the action trigger AT. The action trigger AT is provided to a control unit 502 that is configured for performing the control action AF as described above. As an instantaneous result of the control action AF or as a result after a certain time, preferably the first information I1 will become less than the associated first threshold T1, so that as a consequence preferably the first action trigger TS1 is finally not generated anymore and the control action CA is stopped since the action trigger AT is not generated anymore.

Preferably, the first threshold T1 that is determined by the first threshold determination unit T1 is an adjustable threshold, i.e. the first threshold T1 is adapted to variations of the first information I1 over time.

Particularly preferably, determining the first threshold TS1 considering the first information I1 comprises calculating a statistical parameter S1 derived from the first information I1 over a time period, as indicated in Figure 3 showing an illustration of the first threshold determination unit 102. In particular, the time period is a rolling time period as described in the general part. Consequently, for determining the adjustable first threshold T1, first information I1 is taken into account that has been provided in a predetermined time period right before the first comparison step. The statistical parameter S1 can be determined by considering a series of first information I1 that is continuously provided by the first determination unit 101, so that also an adjusted value of the first threshold T1 can be provided continuously and can be compared for example to the latest first information I1 provided by the first determination unit 101.

In particular, the statistical parameter S1 is calculated by using a combination of a first value V1 based on the first information I1 over the time period and of a second value V2 based on an amount of variation of the first information I1 over the time period. Preferably, the first value V1 is a mean value of the first information I1 over the time period that is provided by a first statistical determination unit 104 of the first threshold determination unit 102, and the second value V2 is a standard deviation of the first information I1 over the time period that is provided by a second statistical determination unit 105 of the first threshold determination unit 102. The combination of the first value V1 and the second value V2 is provided by combination unit 106 that generates the statistical parameter S1. In the shown embodiment, the statistical parameter S1 is the adjustable first threshold T1.

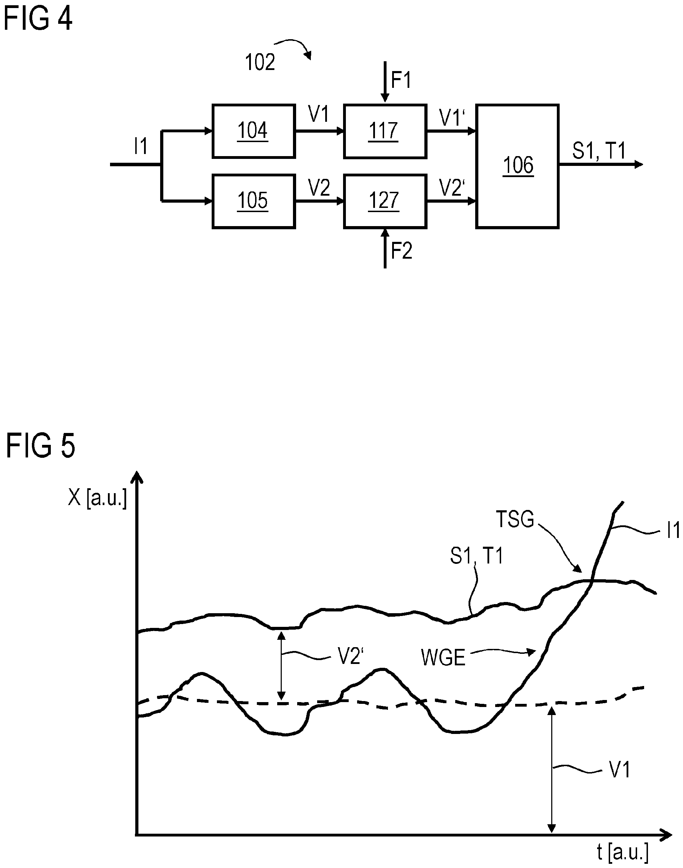

The combination of the first value V1 and the second value V2 can be a sum of the first value V1 and the second value V2. Even more preferably, as indicated in Figure 4 showing a modification of the embodiment of Figure 3, the first value V1 can be multiplied by a factor F1 and the second value V2 can be multiplied by a factor F2. In case the first factor F1 and the second factor F2 are equal to 1, the combination corresponds to the sum of the first value V1 and the second value V2 as depicted in Figure 3. Furthermore, the first factor F1 or the second factor F2 or both can be greater than 1. Preferably, the first factor F1 may be equal to 1 and the second factor F2 may be greater than 1 or greater than 2. Particularly preferably, the first factor F1 is equal to 1 and the second factor F2 is equal to 3. Accordingly, the first threshold determination unit 102 can comprise a first multiplication unit 117 that multiplies the first value V1 with the first factor F1 and provides a weighted first value V1' that is provided to the combination unit 106. Furthermore, the first threshold determination unit 102 can comprise a second multiplication unit 127 that multiplies the second value V2 with the second factor F2 and provides a weighted second value V2' that is provided to the combination unit 106. In case the first factor F1 or the second factor F2 is equal to 1, the first multiplication unit 117 or the second multiplication unit 127 can be omitted.

Accordingly, depending on the factors F1 and F2, the combination can be a sum of the first value V1 and the weighted second factor V2' or of the weighted first value V1' and the second value V2 or of the first weighted factor V1' and the second weighted factor V2'.

The factors F1, F2 can provide a tuning of the first threshold T1. In particular, the second factor F2 can for instance provide a safety gain and can ensure that the first threshold T1 is above the first information I1 to be compared with for at least 99.85 % of cases, assuming that input data is gaussian.

Figure 5 shows a schematic graph of the development of various parameters, denoted on the vertical axis by the placeholder "X", over time t, wherein the parameters are the first information I1, the first threshold T1 which is the statistical parameter S1, as well as the first value V1 and, by way of example, the weighted second value V2'. As long as no critical wind gust event occurs, the first information I1 remains below the adjustable first threshold T1. However, when a wind gust event WGE occurs, the first information I1, by increasing above the first threshold T1, indicates the high increase of the rate of change of the first wind turbine parameter, e.g. the rotor thrust or the generator speed in the exemplary embodiment mentioned before, that is caused by the rapid wind-gust caused increase of the wind speed. When the first information I1 increase above the first threshold T1, the first trigger signal is generated, as indicated by the trigger signal generation event TSG in Figure 5.

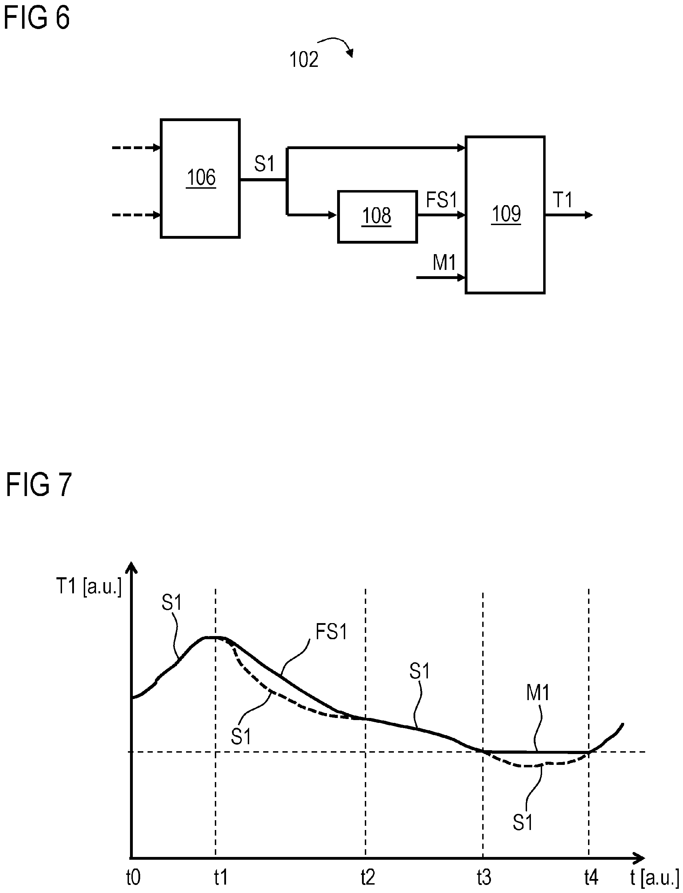

Figure 6 shows a part of the first threshold determination unit 102 according to a further embodiment. In particular, the combination unit 106 is shown that provides the first statistical parameter S1 as explained in connection with Figures 3 and 4. The statistical parameter S1 is provided to a filter unit 108 and is provided directly to a maximum determination unit 109. The filter unit 108 is a P-filter, i.e. a first order low-pass filter that provides a filtered statistical parameter FS1 that falls slower than the unfiltered statistical parameter S1. Furthermore, a predetermined minimum value M1 is provided to the maximum determination unit 109.

In this embodiment, the first threshold T1 is determined and provided by the maximum determination unit 109 that outputs a maximum value chosen from the statistical parameter S1 itself, the filtered statistical parameter FS1 and the predefined minimum value M1.

Figure 7 shows an exemplary variation of the adjustable first threshold T1 with time t in order to illustrate the effect of the embodiment of Figure 6. In a time period between times t0 and t1, the first threshold T1 rises due to an increasing rate of change of the first information and is given by the statistical parameter S1. When the statistical parameter S1 decreases in a following time period between times t1 and t2, the filtered statistical parameter FS1 decreases slower than the unfiltered statistical parameter S1 and defines the first threshold T1, so that a too fast decrease of the first threshold T1, which may lead to an undesired exceedance of the first threshold T1, can be avoided. Between times t3 and t4, the statistical parameter S1 is less than the minimum value M1 that defines the lower limit for the first threshold T1 in that time period and ensures that no first trigger signal is generated when the statistical parameter S1 is very low, meaning that the undesired generation of a trigger signal is avoided.

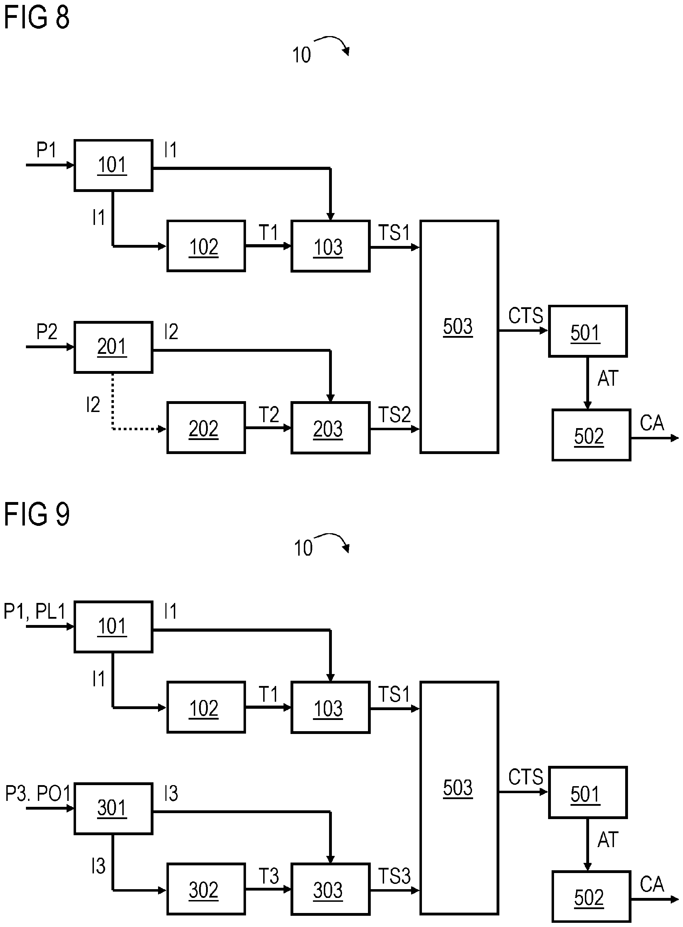

As mentioned above, more than one information, i.e. more than only the first information I1, can be provided for the method for operating the wind turbine. Figure 8 shows a modification of the method for operating the wind turbine according to a further embodiment, wherein the control system 10 comprises a second determination unit 201, a second threshold determination unit 202 and a second comparison unit 203. The method comprises the step of providing second information I2 which is representative of a second wind turbine parameter P2 comprising at least one of a wind turbine loading parameter and a second wind turbine operating parameter, wherein each of the second wind turbine loading parameter and the second wind turbine operating parameter depends on a wind speed at the location of the wind turbine. Furthermore, the method comprises the steps of comparing, in a second comparison step, the second information I2 to a second threshold T2, and, in case the second information I2 exceeds the second threshold T2, generating a second trigger signal TS2. In particular, any features described in connection with the first wind turbine parameter P1, the first information I1 and the processing of the first information I1 can be applied to the second wind turbine parameter P2, the second information I2 and the processing of the second information 12.

In this embodiment, the generation of the action trigger AT requires that both the first trigger signal TS1 und the second trigger signal TS2 are generated. The control system 10 additionally comprises a trigger combining unit 503 that can, for instance, be or comprise a logical AND unit and that generates a combined trigger signal CTS only if both the first trigger signal TS1 und the second trigger signal TS2 are generated. The combined trigger signal CTS is then provided to the control unit 501.

In particular, the second information I2 is different to the first information I1. However, the first information I1 and the second information I2 can for instance be determined based on the same wind turbine related parameter, so that the first wind turbine parameter P1 and the second wind turbine parameter P2 can be the same. Consequently, the first and second information I1, I2 can both for example be based on the same wind turbine loading parameter, i.e. the second wind turbine loading parameter can correspond to the first wind turbine loading parameter, and/or the first and second information I1, I2 can both for example be based on the same wind turbine operating parameter, i.e. the second wind turbine operating parameter can correspond to the first wind turbine operating parameter. For instance, both the first information I1 and the second information I2 can be based on a rotor thrust or on the generator speed. However, as described above, the first information I1 is representative of a rate of change over time of the first/second wind turbine parameter P1, P2, whereas the second information I2 can preferably be representative of the value of the first/second wind turbine parameter P1, P2. In other words, the first information I1 is based on the rate of change, whereas the second information I2 is based on the value itself of the first/second wind turbine parameter P1, P2. Consequently, the first information I1 can be representative of the rate of change over time of the rotor thrust or of the generator speed, for example, whereas the second information I2 can be representative of the actual value of the rotor thrust or of the generator speed.

The second threshold T2 can be a predetermined threshold, i.e. a constant threshold, that is independent of the second information 12. In this case, there is no communication needed between the second determination unit 201 and the second threshold determination unit 202. The second threshold T2 can represent an absolute minimum value for the second information I2 that has to be exceeded in any case for generating an action trigger AT in the end.

Alternatively, the second threshold T2 can be an adjustable threshold and the method can further comprise a step of determining the adjustable second threshold T2 considering the second information I2 as indicated by the dotted connection between the second determination unit 201 and the second threshold determination unit 20. For example, the second threshold T2 can be calculated in a same way or similarly to the first threshold T1 according to the previous embodiments.

Figure 9 shows a further modification of the method and the control system 10 according a further embodiment, wherein the first information I1 is representative of a rate of change of the first wind turbine parameter P1 being the first wind turbine loading parameter PL1, whereas the method further comprises the step of providing third information I3 which is representative of a rate of change of a third wind turbine parameter P3 being the first wind turbine operating parameter PO1. Furthermore, the method comprises the steps of determining an adjustable third threshold T3 based on the third information I3, comparing, in a third comparison step, the third information I3 to the third threshold T3 and generating a third trigger signal TS3 in case the third information I3 exceeds the third threshold T3, wherein the generation of the action trigger AT additionally requires that the third trigger signal TS3 is generated. Accordingly, the control system 10 comprises a third determination unit 301 for determining the third information I3, a third threshold determination unit 302 for determining the third threshold T3, and a third comparison unit 303 for performing the third comparison step.

Particularly preferably, the first wind turbine loading parameter PL1 and, thus, the first wind turbine parameter P1, can be the rotor thrust, so that the first information I1 is representative of a rate of change over time, preferably the first order derivative, of the rotor thrust, whereas the first wind turbine operating parameter PO1 and, thus, the third wind turbine parameter P3,can be the generator speed, so that the third information I2 is representative of a rate of change over time, preferably the first order derivative, of the generator speed.

In particular, the third adjustable threshold T3 can be determined in the same way or similarly to the first threshold T1 as explained in connection with Figures 3 to 7. By taking into account the first information I1 and the third information I3 being representative of the rate of change over time of two different wind turbine related parameters like, for instance, the rotor thrust and the generator speed, a high degree of redundancy can be accomplished.

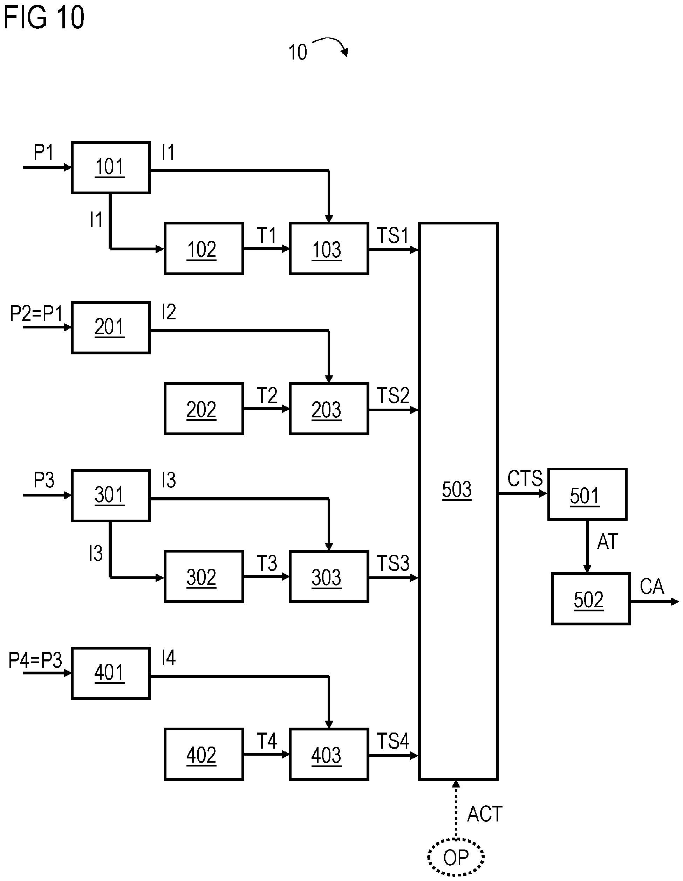

Figure 10 shows a further embodiment of the method and the control system 10 which can be understood as an exemplary combination of the embodiments described before. The control system 10 comprises a first branch comprising the first determination unit 101, the first threshold determination unit 102 and the first comparison unit 103 for providing the first trigger signal TS1 based on the first information I1 in comparison to the adjustable first threshold T1, wherein the first information I1 is representative of a rate of change over time of the first wind turbine parameter P1.

The control system further comprises a second branch comprising the second determination unit 201, the second threshold determination unit 202 and the second comparison unit 203 for providing the second trigger signal TS2 based on the first information I2 in comparison to the predetermined second threshold T2, wherein the second information I2 is representative of the second wind turbine parameter P2 that is the first wind turbine parameter P1. Particularly preferably, the first and second wind turbine parameters P1, P2 are a wind turbine loading parameter as the rotor thrust.

The control system 10 further comprises a third branch comprising the third determination unit 301, the third threshold determination unit 302 and the third comparison unit 303 for providing the third trigger signal TS3 based on the third information I3 in comparison to the adjustable third threshold T3, wherein the third information I3 is representative of a rate of change over time of the third wind turbine parameter P3.

The control system further comprises a fourth branch comprising a fourth determination unit 401, a fourth threshold determination unit 402 and a fourth comparison unit 403 for providing a fourth trigger signal TS4 based on a fourth information I4 in comparison to a predetermined fourth threshold T4, wherein the fourth information I4 is representative of the fourth wind turbine parameter P4 that is the third wind turbine parameter P3. Particularly preferably, the third and fourth wind turbine parameters P3, P4 are a wind turbine operating parameter as the generator speed. In particular, the fourth branch can be embodied in a similar way as the second branch.

According to further embodiments, the wind turbine parameters P1, P2, P3, P4 as well as the information I1, I2, I3, I4 and the thresholds T1, T2, T3, T4 can be chosen differently to the previous description. For example, all wind turbine parameters P1, P2, P3, P4 can also be different.

The trigger combining unit 503 generates a combined trigger signal CTS only if all four trigger signals TS1, TS2, TS3, TS4 are generated. Furthermore, as indicated by the dotted arrow, the control system 10 can additionally have the possibility to actively set an activation trigger ACT, for instance by an operator OP or another control system, wherein the activation trigger ACT can be a fifth trigger signal that is required for generating the combined trigger signal CTS and, thus, the activation trigger AT to provide the control action CA.

The four branches allow a very precise definition of conditions in order to safely identify potentially harmful wind gust events, and provide a high degree of redundancy. In particular, the method and the control system can be suitable to detect outliers in the derivatives of the rotor thrust force and in the generator acceleration, which can be caused by potentially harmful wind gust events. In the shown embodiment with the exemplary wind turbine parameters mentioned before, the detection of extreme wind gust environmental conditions is based on the four conditions that (i) the derivative of the rotor thrust must be greater than the associated adaptive first threshold, (ii) the rotor thrust must be greater than associated constant second threshold, (iii) the derivative of the generator speed must be greater than the associated adaptive third threshold, and (iv) the generator speed must be greater than associated constant fourth threshold. The adaptive thresholds are preferably computed by taking the sum of a moving average filter and a moving standard deviation filter multiplied by a factor that is typically 3, which guarantees that the respective adaptive threshold is above the input for 99.85 % of cases assuming that input data is gaussian. The control action CA that is effected when all conditions are fulfilled is intended to reduce for example the thrust force experienced by the rotor and hence the loads experienced by the wind turbine.

The invention is not restricted by the description on the basis of the exemplary embodiments. Rather, the invention encompasses any new feature and also any combination of features, which in particular comprises any combination of features in the patent claims, even if this feature or this combination itself is not explicitly specified in the patent claims or exemplary embodiments.

### Reference signs

- 1: wind turbine
- 2: rotor
- 3: tower
- 4: foundation
- 5: nacelle
- 6: rotor blade
- 7: rotor hub
- 8: wind turbine controller
- 10: control system
- 101: first determination unit
- 102: first threshold determination unit
- 103: first comparison unit
- 104: first statistical determination unit
- 105: second statistical determination unit
- 106: combination unit
- 108: filter unit
- 109: maximum determination unit
- 117: first multiplication unit
- 127: second multiplication unit
- 201: second determination unit
- 202: second threshold determination unit
- 203: second comparison unit
- 301: third determination unit
- 302: third threshold determination unit
- 303: third comparison unit
- 401: fourth determination unit
- 402: fourth threshold determination unit
- 403: fourth comparison unit
- 501: action trigger generating unit
- 502: control unit
- 503: trigger combining unit
- ACT: activation trigger
- AT: action trigger
- CA: control action
- CTS: combined trigger signal
- F1: first factor
- F2: second factor
- FS1: filtered statistical parameter
- I1: first information
- I2: second information
- I3: third information
- I4: fourth information
- M1: minimum value
- OP: operator
- P1: first wind turbine parameter
- P2: second wind turbine parameter
- P3: third wind turbine parameter
- P4: fourth wind turbine parameter
- PL1: first wind turbine loading parameter
- PO1: first wind turbine operating parameter
- S1: statistical parameter
- T1: first threshold
- T2: second threshold
- T3: third threshold
- T4: fourth threshold
- TG: trigger signal generation
- TS1: first trigger signal
- TS2: second trigger signal
- TS3: third trigger signal
- TS4: fourth trigger signal
- TSG: trigger signal generation event
- V1: first value
- V2: second value
- V1': weighted first value
- V2': weighted second value
- WGE: wind gust event

## Claims

1. Method for operating a wind turbine (1) for reducing a risk of wind turbine overloading in the presence of a wind gust event, comprising the steps:
- providing first information (I1) which is representative of a rate of change of a first wind turbine parameter (P1) comprising at least one of a first wind turbine loading parameter and a first wind turbine operating parameter over time, wherein each of the first wind turbine loading parameter and the first wind turbine operating parameter depends on a wind speed at the location of the wind turbine (1),
- determining an adjustable first threshold (T1) considering the first information (I1),
- comparing, in a first comparison step, the first information (I1) to the first threshold (T1) and generating a first trigger signal (TS1) in case the first information (I1) exceeds the first threshold (T1),
- generating a control action (CA) intended to reduce the risk of wind turbine overloading caused by the wind gust event in case an action trigger (AT) is generated, wherein the generation of the action trigger (AT) requires that at least the first trigger signal (TS1) is generated.

2. Method according to claim 1, wherein the first wind turbine loading parameter is indicative of at least one of a rotor thrust, a tower bending moment and a nacelle acceleration and the first wind turbine operating parameter is indicative of a generator speed.

3. Method according to claim 1 or 2, wherein the rotor thrust is estimated based on at least one of a wind speed, a pitch angle, a generator speed, a generator torque, an air density at the location of the wind turbine (1) and an electrical power generated by the wind turbine (1).

4. Method according to any one of the preceding claims, wherein the first information (I1) is indicative of a time derivative of the first wind turbine loading parameter and/or a time derivative of the first wind turbine operating parameter.

5. Method according to any one of the preceding claims, wherein
- determining the first threshold (T1) considering the first information (I1) comprises calculating a statistical parameter (S1) derived from the first information (I1) over a time period, in particular a rolling time period, and
- the statistical parameter (S1) is determined by using a combination of a first value (V1) based on the first information (I1) over the time period and of a second value (V2) based on an amount of variation of the first information (I1) over the time period.

6. Method according to claim 5, wherein the first value (V1) is a mean value of the first information (I1) over the time period, the second value (V2) is a standard deviation of the first information (I1) over the time period and the combination is a sum of a weighted first value (V1') corresponding to the first value (V1) multiplied by a first factor (F1) and of a weighted second value (V2') corresponding to the second value (V2) multiplied by a second factor (F2).

7. Method according to any one of the preceding claims, wherein determining the first threshold (T1) considering the first information (I1) comprises calculating a statistical parameter (S1) derived from the first information (I1) over a time period, wherein the first threshold (T1) is defined as a maximum value chosen from the statistical parameter (S1), a filtered signal (FS1) resulting from filtering the statistical parameter (S1), and a predefined minimum value (M1).

8. Method according to claim 7, wherein the filtered signal (FS1) results from filtering the statistical parameter (S1) by using a P-filter.

9. Method according to any one of the preceding claims, further comprising the steps:
- providing second information (I2) which is representative of a second wind turbine parameter (P2) comprising at least one a second wind turbine loading parameter and/or a second wind turbine operating parameter, wherein each of the second wind turbine loading parameter and the second wind turbine operating parameter depends on a wind speed at the location of the wind turbine,
- comparing, in a second comparison step, the second information (I2) to a second threshold (T2), and, in case the second information (I2) exceeds the second threshold (T2), generating a second trigger signal (TS2),
- wherein the generation of the action trigger (AT) additionally requires that the second trigger signal (TS2) is generated.

10. Method according to claim 9, wherein the second wind turbine parameter corresponds to the first wind turbine parameter.

11. Method according to claim 9 or 10, wherein the second threshold is an adjustable threshold and the method further comprises a step of determining the adjustable second threshold considering the second information.

12. Method according to any one of the preceding claims, wherein the first information (I1) is representative of a rate of change of the first wind turbine loading parameter, the method further comprising the steps:
- providing third information (I3) which is representative of a rate of change of the first wind turbine operating parameter,
- determining an adjustable third threshold (T3) based on the third information (I3),
- comparing, in a third comparison step, the third information (I3) to the third threshold (T3) and generating a third trigger signal (TS3) in case the third information (I3) exceeds the third threshold (T3),
- wherein the generation of the action trigger (CA) additionally requires that the third trigger signal (TS3) is generated.

13. Method according to any one of claims 1 to 12, wherein the control action (CA) comprises a collective pitch control action, a generator torque control action and/or a generator power control action.

14. Method according to any one of claims 1 to 13, wherein the control action (CA) is stopped in case the action trigger (AT) is not generated anymore.

15. Wind turbine (1) comprising a control system (1000) for performing the method according to any one of the claims 1 to 14, the control system (1000) comprising
- a first determination unit (101) for providing the first information (I1),
- a first threshold determination unit (102) for determining the first threshold (T1),
- a first comparison unit (103) for performing the first comparison step,
- an action trigger generating unit (104) for generating the action trigger (AT),
- a control unit (502) performing the control action (CA) on at least one component of the wind turbine (1).
